Europäisches Patentamt

European Patent Office

Office européen des brevets

(19)

(11) Veröffentlichungsnummer: **0 356 946**
**A2**

(12) **EUROPÄISCHE PATENTANMELDUNG**

(21) Anmeldenummer: **89115764.6**

(22) Anmeldetag: **26.08.89**

(51) Int. Cl.⁵: **C08L 63/00 , C08G 59/50 ,**
**C08G 59/32 , C08G 59/38 ,**
**C08J 5/24**

(30) Priorität: **01.09.88 DE 3829662**

(43) Veröffentlichungstag der Anmeldung:
**07.03.90 Patentblatt 90/10**

(84) Benannte Vertragsstaaten:
**AT CH DE ES FR GB IT LI NL SE**

(71) Anmelder: **BASF Aktiengesellschaft**
**Carl-Bosch-Strasse 38**
**D-6700 Ludwigshafen(DE)**

(72) Erfinder: **Lang, Reinhold, Dr.**
**Hauptstrasse 42**
**D-6900 Heidelberg(DE)**
Erfinder: **Tesch, Helmut, Dr.**
**Im Schlittweg 9**
**D-6701 Roedersheim-Gronau(DE)**
Erfinder: **Linden, Gerd, Dr.**
**Brunnengasse 18**
**D-6900 Heidelberg(DE)**
Erfinder: **Schornick, Gunnar, Dr.**
**Dr.-Konrad-Adenauer-Strasse 8**
**D-6719 Neuleiningen(DE)**

(54) **Epoxidharzmischungen für Faserverbundwerkstoffe.**

(57) Die Erfindung betrifft Epoxidharzmischungen, enthaltend
A. ein Epoxidharz mit einer hohen Funktionalität,
B. ein Epoxidharz mit einer niedrigen Funktionalität und hohem Molekulargewicht,
C. gegebenenfalls ein Epoxidharz mit einer niedrigen Funktionalität und niedrigem Molekulargewicht,
D. einen N-haltigen Härter
E. gegebenenfalls einen Beschleuniger,
F. gegebenenfalls einen Kautschuk und
G. gegebenenfalls einen temperaturbeständigen Thermoplasten.

EP 0 356 946 A2

## Epoxidharzmischungen für Faserverbundwerkstoffe

Erfindung betrifft wärmehärtbare Epoxidharz-Mischungen für Faserverbundwerkstoffe mit verbesserten Zähigkeiten und heiß/feucht-Eigenschaften.

Epoxidharze zur Herstellung von Hochleistungsverbundwerkstoffen durch Tränken von Verstärkungsfasern und nachfolgender thermischer Aushärtung sind bekannt. Wesentliche Anforderungen an Verbundwerkstoffe sind hohe Steifigkeit und Festigkeit, hohe Schadenstoleranz nach Schlagbeanspruchung und hohe Temperaturbeständigkeit. Durch Wasseraufnahme der Epoxidharze in den Verbundwerkstoffen sinken unter realen Umweltbedingungen die Erweichungstemperaturen der Materialien und dadurch auch die Festigkeitseigenschaften bei höheren Temperaturen (heiß/feucht-Eigenschaften) ab.

Insbesondere für die Anwendung bei sogenannten Primärstrukturen im Flugzeugbau werden Bauteile mit verbessertem Schadenstolerenzverhalten und verbesserten heiß/feucht-Eigenschaften gefordert. Für solche verbesserte Bauteile benötigt man Harze höherer Zähigkeit und höherer Erweichungstemperatur nach Wasseraufnahme bei gleichzeitig hoher Steifigkeit.

Die meisten bekannten Maßnahmen zur Verbesserung der Zähigkeit von Epoxidharzen führen jedoch zu einem Abfall der Erweichungstemperatur und der Steifigkeit. Umgekehrt führen Maßnahmen zur Erhöhung der Erweichungstemperatur und des Moduls im allgemeinen zu einer Versprödung des Materials.

Üblicherweise sind Epoxidharze, die im Flugzeugbau Verwendung finden, aus hoczhfunktionellen Epoxid-Bausteinen aufgebaut. Ein in vielen Epoxidharzformulierungen verwendeter Baustein ist das 4-funktionelle Tetraglycidyl-Diaminodiphenylmethan (TGDDM). Die hohe Vernetzungsdichte nach der Aushärtung bewirkt eine hohe Steifigkeit und Temperaturbeständigkeit, ist aber andererseits auch Ursache für die mangelnde Zähigkeit des Materials.

Üblicherweise setzt man zur Reduzierung ver Vernetzungsdichte Mischungen aus 4-funktionellen und niedermolekularen 2-funktionellen Epoxid-Bausteinen ein. Damit erreicht man zwar bei hohen Konzentrationen der 2-funktionellen Komponente eine Verbesserung der Zähigkeit, jedoch sinken Steifigkeit und Temperaturbeständigkeit stark ab. Am Beispiel von Mischungen aus TGDDM und Bisphenol A-Diglycidylether (DGEBA) mit einem mittleren Molekulargewicht von etwa 380 (entsprechend einem Epoxidäquivalentgewicht von etwa 190), die mit 4,4′-Diaminodiphenylsulfon gehärtet werden, ist dies von Niederstadt in Kunststoffberater 11/12, S. 25 (1983) gezeigt worden.

Weiterhin ist es bekannt, daß man die Vernetzungsdichte in 2-funktionellen Epoxid-Harzen auch durch Erhöhung des Molekulargewichts erniedrigen kann. Auch dadurch wird die Zähigkeit verbessert, jedoch wiederum auf Kosten der Steifigkeit und der Erweichungstemperatur . Am Beispiel von DGEBA mit verschiedenen Molekulargewichten ist dies von Yee und Pearson in J. Mat. Sci. 21, 2462 (1986) und von Banks und Ellis in Polymer 23, 1466 (1982) gezeigt worden.

Aus US-4 309 473 ist es bekannt, höhermolekulare Epoxidharze mit einem Molekulargewicht von 5000 oder mehr höherfunktionellen EP-Harzen zuzusetzen. Die erhaltenen Harzmischungen zeigen jedoch keinerlei Klebrigkeit (Tack) im Prepreg.

Der Erfindung lag die Aufgabe zugrunde, Epoxidharzmischungen zu entwickeln, die beim Aushrten Formkörper mit verbesserter Zähigkeit ergeben, ohne daß aber Steifigkeit und Wärmebeständigkeit merklich verringert werden. Außerdem sollen die Mischungen zu Prepregs mit Tack und guter Drapierfähigkeit verarbeitbar sein.

Es wurde nun gefunden, daß die Aufgabe überraschenderweise gelöst wird, wenn man Mischungen aus höherfunktionellen Epoxid-Bausteinen mit 2-funktionellen Epoxid-Bausteinen höheren Molekulargewichts in einem bestimmten Mischungsverhältnis einsetzt und diese mit üblichen Härtern zu Formstoffen aushärtet. Dieser Effekt war insofern überraschend, als es bekannt war, daß jede der beiden Maßnahmen für sich allein - Zusatz von 2-funktionellen zu höherfunktionellen Epoxidharzen bzw. Erhöhung des Molekulargewichts der 2-funktionellen Epoxidharze - nur zur Verbesserung der Zähigkeit auf Kosten von Steifigkeit und Temperaturbeständigkeit führt.

Gegenstand der Erfindung sind also Epoxidharzmischungen, enthaltend

A. 100 Gew.-Teile eines Epoxidharzes mit einer mittleren Funktionalität von 3 oder größer,

B. 25 bis 150, vorzugsweise 40 bis 120 Gew.-Teile eines Epoxidharzes mit einer mittleren Funktionalität von 1,5 bis 2,2, bevorzugt 1,8 bis 2 und einem Epoxidäquivalentgewicht von 350 bis 2000, bevorzugt 400 bis 1500;

C. gegebenenfalls 1 bis 50, vorzugsweise 5 bis 20 Gew.-Teile (bezogen auf A + B) eines Epoxidharzes mit einer mittleren Funktionalität von kleiner als 2,5 und einem Epoxidäquivalentgewicht von kleiner als 250;

D. 3 bis 60, vorzugsweise 5 bis 40 Gew.-Teile (bezogen auf A + B) eines N-haltigen Härters;

2

E. gegebenenfalls 0,1 bis 10 Gew.-Teile (bezogen auf A + B) eines Härtungsbeschleunigers;

F. gegebenenfalls 1 bis 10 Gew.-Teile (bezogen auf A + B) eines Kautschuks; und

G. gegebenenfalls 1 bis 50 Gew.-Teile (bezogen auf A + B) eines thermoplastischen Polymeren mit einer Erweichungstemperatur oberhalb von 90°C.

Zu den Einsatzstoffen ist im einzelnen folgendes zu sagen:

A) Als EP-Harze mit einer mittleren Funktionalität von 3 oder größer sind aromatische EP-Harze bevorzugt, die 3 oder 4 EP-Gruppen pro Molekül und eine Erweichungstemperatur unterhalb von 30°C haben.

Geeignete EP-Harze sind z.B. Tetraglycidyl-Diaminodiphenylmethan (Araldit MY 720 und Araldit MY 721 von CIBA-GEIGY), Triglycidyl-Aminophenol und Triglycidyl-Triphenolmethan. Auch Mischungen von zwei oder mehr EP-Harzen können eingesetzt werden.

B) Als EP-Harze mit einer mittleren Funktionalität von 1,5 bis 2,2 und EEW von 350 bis 2000 sind aromatische EP-Harze bevorzugt, die zwei endständige EP-Gruppen pro Molekül haben und eine Erweichungstemperatur unterhalb von 100°C.

Geeignete EP-Harze sind z.B. Bisphenol A-Diglycidylether mit EEW zwischen 400 und 1500, z.B. Epikote 1001 und SHELL und DER 661, DER 662, DER 664 von DOW Chemical und Bisphenol F-Diglycidylether und 4,4'-Dihydroxydiphenylsulfon-Diglyidylether.

C) Bevorzugte weitere EP-Harze sind niederviskose EP-Harze mit zwei EP-Gruppen pro Molekül, die als sog. Reaktivverdünner zur Einstellung der gewünschten Viskosität wirken. Beispiele sind Bisphenol A-Diglycidylether (z.B. Epikote 828 von SHELL) mit EEW von ca. 190, Bisphenol F-Diglycidylether mit EEW von ca. 160 und 1,4-Butandiol-Diglycidylether.

D) Bevorzugte Härter sind aliphatische, alicyclische und aromatische Diamine mit einem Molekulargewicht unterhalb von 700 sowie Dicyandiamid. Besonders bevorzugt sind aromatische Amine, z.B. 4,4'-Diaminodiphenyl sulfon in einer Konzentration von etwa 0,8 bis 1,6 NH-Gruppen pro EP-Gruppe oder Dicyandiamid in einer Konzentration von etwa 0,08 bis 0,2 mol pro EP-Gruppe.

E) Übliche für die Härtung von Aminen oder Dicyandiamid verwendete Beschleuniger sind z.B. Bortrifluorid-Ethylamin, Imidazol-Verbindungen sowie N-4-Chlorphenyl-N'-dimethylharnstoff (Monuron von Dupont) und N-3,4-Dichlorphenyl-N'-dimethylharnstoff (Diuron von Dupont).

F) Übliche für die Zähmodifizierung von EP-Harzen verwendete Kautschuke sind z.B. carboxylterminierte Acrylnitril-Butadienkautschuke (Hycar von B.F. Goodrich), organofunktionelle Siloxane (Tego OF von Th. Goldschmidt AG), Acrylatkautschuke.

G) Bevorzugt sind aromatische nieder- oder hochmolekulare Thermoplaste wie z.B. Polyhydroxyether, Polyethersulfone oder Polysulfone, die in der EP-Harz-Mischung löslich sind.

Darüber hinaus kann die Mischung andere übliche Zuschlagstoffe wie Pigmente, Flammschutzmittel oder sonstige Hilfsmittel enthalten.

Die erfindungsgemäßen Harze sind als Imprägnierharze zur Herstellung von Prepregs geeignet. Dazu werden z.B. Glas-, Kohlenstoff- oder Aramidfasern unter Bildung von unidirektionalen Prepregs, Gewebeprepregs oder Prepreg-Rovings entweder aus der Schmelze oder aus Lösung getränkt.

Die Herstellung der Harzmischung erfolgt dabei durch Mischen der Komponenten in einem Lösungsmittel oder direkt in der Schmelze. Mischt man direkt in der Schmelze, so werden zunächst die EP-Komponenten bei Temperaturen von ca. 80 bis ca. 130°C zusammengegeben und danach gegebenenfalls Additive wie Kautschuke oder Thermoplaste in der Mischung gelöst. Verwendet man carboxylterminierte Butadien-Acrylnitril-Kautschuke, so wird zur chemischen Anbindung des Kautschuks an die EP-Harze die Mischung unter Zusatz eines üblichen Katalysators, z.B. Triphenylphosphin, einige Zeit bei Temperaturen von ca. 110 bis 130°C gehalten. Danach wird die Mischung gekühlt und Härter und ggf. Beschleuniger werden zugesetzt. Bei den bevorzugten aromatischen Aminhärtern erfolgt das bei Temperaturen von etwa 70 bis 90°C, bei Dicyandiamid bei etwa 90 bis 110°C. Die fertige Harzmischung wird auf handelsüblichen Prepreganlagen, z.B. nach dem Harzfilmtransferverfahren verarbeitet. Sollen die Prepregs durch Tränken der Fasern mit Harzlösungen hergestellt werden, wird die Mischung in einem Lösungsmittel, bevorzugt Aceton, hergestellt und das Lösungsmittel wird nach Tränken der Fasern verdampft.

Die Härtung der Prepregs zum Faserverbundwerkstoff erfolgt bei 60 bis 210°C, bevorzugt bei 100 bis 180°C.

Beispiele

Herstellung der Harzformulierungen

Beispiel 1

600 g Araldit MY 720 werden auf 120° C erhitzt. 66 g Hycar CTBN 1300 x 13 werden zugesetzt und unter Rühren aufgelöst. Nach Zugabe von 0,15 g Triphenylphosphin wird die Mischung 2 h bei 120° C gerührt.

230 g Epikote 1001, (EEW 450-500) und 29 g Epikote 828 (EEW 184-194) werden zugesetzt und unter Rühren bei 120° C aufgelöst.

Nachdem eine vollkommen homogene Mischung vorliegt, wird auf 95 bis 100° C abgekühlt und 44 g gemahlenes Dicyandiamid (Partikelgrößen unterhalb 25 μm) zugesetzt. Zur homogenen Verteilung wird 30 min. intensiv gerührt.

Nach Abkühlen auf 75 bis 80° C werden 31 g gemahlenes Diuron (Partikelgrößen unterhalb 25 μm) zugegeben und noch einmal 30 min intensiv gerührt. Danach wird die Mischung zur Entfernung eingeschlossener Luft evakuiert.

Nach dieser Methode werden alle im folgenden beschriebenen Harzmischungen hergestellt.

Probekörperherstellung und Prüfung (unverstärkte Probekörper)

Die Harzmischungen werden zwischen vorgeheizten, mit einem Trennmittel besprühten Stahlplatten in einem Umluft-Wärmeschrank zu 4 mm dicken Platten der Größe 250 x 250 mm ausgehärtet (Härtung: 1 h bei 100° C und nachfolgend 1 h bei 125° C). Aus den gehärteten Platten werden Probekörper herausgefräst für folgende Prüfungen:
- Rißzähigkeit $G_{IC}$ (nach ASTM-E-399)
- Erweichungstemperatur $T_S$ (trockene und feucht-gelagerte Probekörper)
- Schubmodul $G'$ bei 23° C (trocken)
- Schubmodul $G'$ bei 80° C (feucht)
- Wasseraufnahme bei Feuchtlagerung

Schubmoduln und Erweichungstemperaturen werden mit dem Gerät RDA-700 der Fa. Rheometrics bei einer Frequenz von 1 Hz und einer Aufheizrate von 4 K/min bestimmt (Probekörperdimensionen 53 x 11x4 mm). Als Erweichungstemperaturen werden die Schnittpunkte der Tangenten an den Schubmodulkurven definiert. Zur Bestimmung der Daten nach Feuchtlagerung werden Proben 30 Tage in 70° C warmem destilliertem Wasser gelagert. Die Wasseraufnahme wird gravimetrisch ermittelt.

Anhand der in Tab. 1 aufgeführten erfindungsgemäßen (Bsp. 1 und 2) Vergleichsbeispiele (Bsp. 3 und 4) und der dazugehörigen Eigenschaften in Tab. 2 wird der Vorteil der erfindungsgemäßen Harzformulierungen deutlich.

Tabelle 1

| Zusammensetzung der Mischungen (Gew.-Teile) | | | | | | |
|---|---|---|---|---|---|---|
| Beispiel | Araldit MY 720 (A) | Epikote 1001 (B) | Epikote 828 (C) | Dicyandiamid (D) | Diuron (E) | Hycar CTBN 1300 x 13 (F) |
| 1 | 60,0 | 23,0 | 2,9 | 4,4 | 3,1 | 6,6 |
| 2 | 60,0 | 18,0 | 7,9 | 4,4 | 3,1 | 6,6 |
| 3 | 60,0 | 10,2 | 10,2 | 4,8 | 3,4 | 6,6 |
| 4 | 60,0 | - | 25,0 | 4,9 | 3,5 | 6,6 |

4

Tabelle 2

| Eigenschaften der gehärteten Formkörper | | | | | |
|---|---|---|---|---|---|
| Beispiel | $G_{IC}$ J/m² | $T_s$ trocken °C | $T_s$ feucht °C | Schubmodul G' trocken (23 °C) N/mm² | Schubmodul G' feucht N/mm² | Wasseraufnahme % |
| 1 | 302 | 147 | 103 | 1210 | 700 | 6,6 |
| 2 | 234 | 146 | 101 | 1230 | 670 | 6,6 |
| 3 | 175 | 144 | 102 | 1250 | 690 | 6,7 |
| 4 | 141 | 148 | 103 | 1140 | 710 | 7,2 |

Tabelle 3 und 4 enthalten weitere Beispiele erfindungsgemäßer Harzformulierungen mit Eigenschaften

Tabelle 3

| Zusammensetzung der Mischungen in Gew.-Teile | | | |
|---|---|---|---|
| Beispiel | 5 | 6 | 7 |
| Araldt MY 720 | 38,5 | 43,6 | - |
| Araldt MY 721 | - | - | 44,2 |
| Epikote 1001 | 37,0 | 42,9 | 41,0 |
| Epikote 828 | 9,2 | 2,7 | 3,3 |
| Dicyandiamid | 3,9 | 3,9 | 4,1 |
| Diuron | 2,7 | 2,7 | 2,8 |
| Hycar CTBN 1300 x 13 | 7,7 | 4,2 | 3,7 |
| Hycar CTBN 1300 x 8 | - | - | 0,9 |

| Beispiel 4 - Eigenschaften ausgehärteter Formteile | | | |
|---|---|---|---|
| Beispiel | 5 | 6 | 7 |
| $G_{IC}$ J/m² | 469 | 246 | 250 |
| $T_s$ trocken °C | 135 | 129 | 135 |
| $T_s$ feucht °C | 91 | 94 | 94 |
| Schubmodul (23 °C)trocken N/mm² | 1130 (32 °C) | 1260 | 1180 |
| Schubmodul (23 °C)feucht N/mm² | 690 | 810 | 780 |
| Wasseraufnahme % | 5,2 | 5,3 | 5,0 |

Prepregherstellung

Aus den Harzmischungen wird auf einer Beschichtungsmaschine ein Harzfilm auf einem Trennpapier hergestellt, der auf einer Prepregmaschine nach dem Harzfilmtransferverfahren mit parallelisierten Kohlenstoff-Faser-Rovings vom Typ Toray T 300 6000 X 50 B zu einem unidirektionalen Prepreg verarbeitet wird. Harzgehalt und Faserflächengewicht werden so eingestellt, daß nach dem Aushärten ein Laminat mit 60 Vol.% Fasern und einer Dicke von 0,125 mm pro Prepreglage erhalten wird. Die Prepregs werden mit einer Schutzfolie versehen, aufgewickelt und bis zur Laminatherstellung bei -18 °C gelagert.

Probekörperherstellung und Prüfung

Aus den Prepregs werden Laminate für Prüfungen mechanischer Eigenschaften nach DIN 29971 (0°-Zugfestigkeit, 90°-Zugfestigkeit, 0°-Druckfestigkeit, 0°/±45°-interaminare Scherfestigkeit) und NASA RP 1092 (interlaminare Rißzähigkeit) hergestellt. Die Härtung erfolgt im Autoklaven bei einem Druck von 7 bar im Vakuumsack, einer Aufheizrate von 1 bis 3°C/min von Raumtemperatur auf 125°C und einer Härtungszeit von 60 min. bei 125°C. Der Faservolumengehalt der Laminate beträgt 60 %.

An den aus der Harzformulierung 6 mit T 300 6000 X 50 B hergestellten Laminaten werden folgende Eigenschaften bei einer Prüftemperatur von 23°C gemessen werden:

| $G_{IC}$ | 260 J/m$^2$ |
|---|---|
| 0°-Zugfestigkeit | 1690 N/mm$^2$ |
| 90°-Zugfestigkeit | 75 N/mm$^2$ |
| 0°-Druckfestigkeit | 1310 N/mm$^2$ |
| 0°/±45°-Interlaminare Scherfestigkeit | 76 N/mm$^2$ |

## Ansprüche

1. Epoxidharzmischungen, enthaltend
A. 100 Gew.-Teile eines Epoxidharzes mit einer mittleren Funktionalität von 3 oder größer,
B. 25 bis 150, vorzugsweise 40 bis 120 Gew.-Teile eines Epoxidharzes mit einer mittleren Funktionalität von 1,5 bis 2,2 und einem Epoxidäquivalentgewicht von 350 bis 2000;
C. gegebenenfalls 1 bis 50 Gew.-Teile (bezogen auf A + B) eines Epoxidharzes mit einer mittleren Funktionalität von kleiner als 2,5 und einem Epoxidäquivalentgewicht von kleiner als 250;
D. 3 bis 60 Gew.-Teile (bezogen auf A + B) eines N-haltigen Härters;
E. gegebenenfalls 0,1 bis 10 Gew.-Teile (bezogen auf A + B) eines Härtungsbeschleunigers;
F. gegebenenfalls 1 bis 10 Gew.-Teile (bezogen auf A + B) eines Kautschuks; und
G. gegebenenfalls 1 bis 50 Gew.-Teile (bezogen auf A + B) eines thermoplastischen Polymeren mit einer Erweichungstemperatur oberhalb von 90°C.

2. Prepreg für Hochleistungsverbundwerkstoffe, enthaltend die Epoxidharzmischung nach Anspruch 1 und 30 bis 80 Gew.% Verstärkungsfasern.